# EUROPEAN PATENT SPECIFICATION

(11) **EP 0 729 793 B1**
(45) Date of publication and mention of the grant of the patent: **05.09.2001**
(21) Application number: 96103218.2
(22) Date of filing: 01.03.1996
(51) Int. Cl.: B05D 1/18, C08J 5/18

(54) **Organic thin film having structure orientated with high regularity and making method thereof**
Organische Dünnschicht mit gleichmässig orientierter Struktur und Verfahren zu ihrer Herstellung
Couche mince organique ayant une structure orientée avec haute régularité et procédé pour sa production

(30) Priority: 02.03.1995 JP 6867695
(43) Date of publication of application: 04.09.1996
(73) Proprietor: RESEARCH DEVELOPMENT CORPORATION OF JAPAN, Kawaguchii, Saitama 332 (JP); Seiko Instruments Inc., Chiba-shi, Chiba 261-8507 (JP)
(72) Inventor: Kunitake, Masashi, Sendai-shi, Miyagi-ken, 982 (JP); Nikola, Batina, Sendai-shi, Miyagi-ken, 982 (JP); Itaya, Kingo, Sendai-shi, Miyagi-ken, 980 (JP); Sakuhara, Toshihiko, Yachimata-shi Chiba-ken 289-11 (JP)
(74) Representative: Müller-Boré & Partner Patentanwälte

(56) References cited:
- EP-A- 0 671 219
- DATABASE WPI Section Ch, Week 9347 Derwent Publications Ltd., London, GB; Class A85, AN 93-372602 XP002005991 & JP-A-05 275 771 (SHINGIJUTSU JIGYODAN) , 22 October 1993

## Description

The present invention relates to an organic thin film having the structure orientated with high regularity suitable for high-quality elements such as liquid crystals, photoelectric transfer elements, nonlinear optical elements or sensors, and a new method for making said thin film.

Conventional processes for making orientated organic thin films are classified to a wet process using a liquid phase and a dry process especially carried out in a vacuum atmosphere.

A casting method for forming a thin film by the removal of a liquid solvent, an LB method for laminating a monolayer film on the surface of an aqueous liquid, a liquid epitaxy method for growing single crystal from a liquid phase, an electropolymerizing method for electrolytically polymerizing an organic substance on the surface of an electrode, an anodizing method for forming an oxide film by electrolytic reaction and an electrodeposition method for growing superfine particles in a dispersed state belong to the wet process.

A vacuum vapor deposition method, an MBE method using ultra-high vacuum, a cluster ion beam method, a vacuum vapor deposition method accompanied with ion beam irradiation, a high-frequency ion plating method, a sputtering method a plasma polymerization method and CVD belong to the dry process.

Amongst these, the LB method, the vacuum vapor deposition method, the cluster ion beam method and the vacuum vapor deposition method accompanied with the ion beam irradiation have been regarded as the method suitable for forming thin films excellent in orientation.

However, the conventional film-forming methods have strict restrictions on the kind of organic compounds capable of forming thin films having good orientation. For instance, the LB method necessitates the use of organic compounds having hydrophilic and hydrophobic radicals in one molecule. In addition, aromatic compounds can not be formed to thin films having good orientation by any method.

On the other hand, the thin films shall have the structure orientated with high regularity in order to use them as high-functional elements such as liquid crystals, photoelectric transfer elements, nonlinear optical elements or sensors.

By the way, superfine observation in the view of molecular or atomic scope becomes possible in the progress of a scanning tunnel microscope. Such observation has been applied to the analysis of organic thin films, too. In actual, there are various reports on the observation of orientated organic thin films as well as methods for forming organic thin films excellent in orientation. However, these reports are limited to the films prepared by the dry process such as vacuum deposition, cluster ion beam irradiation or vacuum deposition accompanied with ion beam irradiation, and the thin films are limited to organic compounds such as liquid crystals or benzene.

The present invention is accomplished to eliminate the restrictions mentioned above.

The object of the present invention is to obtain an organic thin film having the structure orientated with high regularity from any aromatic compound by preadsorbing halogen or halogenic ion on a substrate.

The organic thin film having orientation controlled according to the present invention comprises the preadsorption layer of halogen or halogenic ion onto a metallic substrate and the adsorption layer of an aromatic compound adsorbed through said preadsorption layer onto said substrate.

The organic thin film is prepared by preadsorbing halogen or halogenic ion onto a metallic substrate and then adsorbing an aromatic compound thereonto. The metallic body onto which halogen or halogenic ion is preadsorbed may be used as the metallic substrate. In this case, the metallic body is dipped in the solution which dissolves an aromatic compound having unsaturated bond therein. The adsorption of halogen or halogenic ion may be performed from liquid phase or vapor phase.

Fig. 1 illustrates the constitutional formula of a linear aromatic compound used in Example 1.

Fig. 2 shows the STM image of an organic thin film made in Example 1.

Fig. 3 illustrates the constitutional formula of crystal violet used in Example 2.

Fig. 4 shows the STM image of an organic thin film made in Example 2.

Fig. 5 illustrates the constitutional formula of a porphyrin compound used in Example 3.

Fig. 6 shows the STM image of an organic thin film made in Example 3.

An aromatic compound has the tendency to be firmly adsorbed onto a metallic surface in general. The adsorption force of the aromatic compound is too strong, when the aromatic compound is held in direct contact with the metallic surface. Consequently, it is difficult to maintain the structure wherein the molecules are arranged together with high regularity, so that a thin film having good orientation can not be formed.

On the other hand, when halogen or halogenic ion is preadsorbed onto the metallic surface, the adsorption force of the aromatic compound onto the metallic surface is reduced by the preadsorbed halogen or halogenic ion. Consequently, the intermolecular function of the aromatic compound effectively serves for the autogeneous formation of the molecular structure with high regularity. As a result, the thin film improved in orientation is obtained.

The amount of halogen or halogenic ion to be adsorbed does not put restrictions on the scope of the present invention. However, the adsorption in the state of a mono-atomic or a few atomic-layers is effective for improving the orientated structure of the organic thin film. The halogen may be F, Cl, Br or I, while the halogenic ion may be F⁻, Cl⁻, Br⁻ or I⁻.

There are no restrictions on the kind of the aromatic compound to be formed to the thin film according to the present invention, as far as the aromatic compound is dissolved in water or an organic solvent such as benzene, chloroform, hexane or alcohol. For instance, the aromatic compound may be an organic compound having condensed polycyclic hydrocarbon such as benzene or naphthalene ring, or an organic compound having heterocyclic ring containing 0, S, N or the other atom except C.

### Example 1:

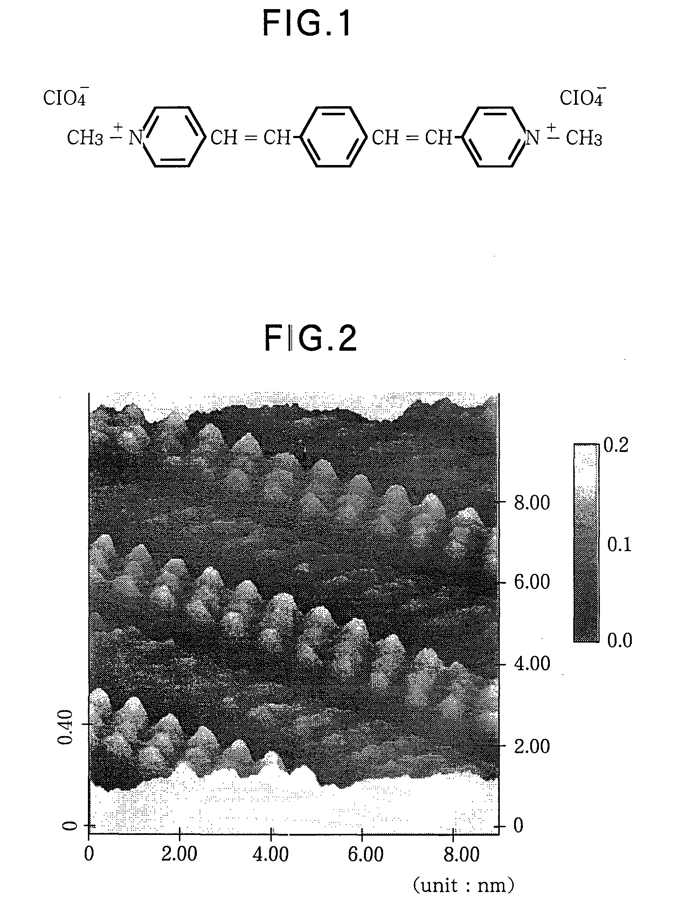

The compound having the structure shown in Fig. 1 was used as a linear aromatic compound. The compound was dissolved in water so as to prepare a 1*µ*M solution. An Au piece was used as a metallic substrate. The Au piece was previously modified with the adsorption of I by dipping it in a 1mM-KI solution.

Fig. 2 shows the STM image of the thin film obtained in this example. The presence of the compound molecular is noted in Fig. 2, since 3 rings comprising the benzene ring and the other rings including N atoms were linearly arranged. In addition, each molecule is arranged together in the state that the rings of adjacent molecules adjoin each other. Consequently, it is confirmed that the obtained organic thin film has the structure orientated with high regularity.

### Example 2:

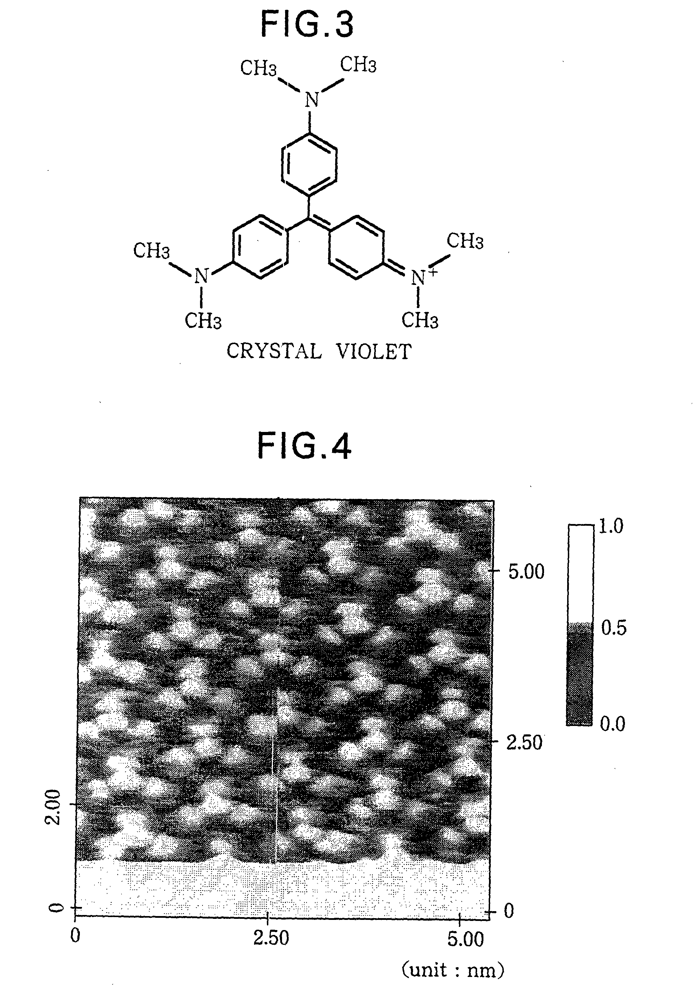

Crystal violet having the structure shown in Fig. 3 was used as an aromatic compound in this example, and dissolved in water to prepare 1 *µ*M solution. The Au piece onto which I was preadsorbed in the same way as in Example 1 was dipped in the aqueous solution for 30 minutes, so as to adsorb the crystal violet onto the Au piece.

Fig. 4 shows the STM image of the thin film obtained in this example. It is noted in Fig. 4 that the obtained organic thin film had the structure orientated with high regularity. Organic thin films having the same orientation were formed, when benzene was used as a solvent instead of water.

### Example 3:

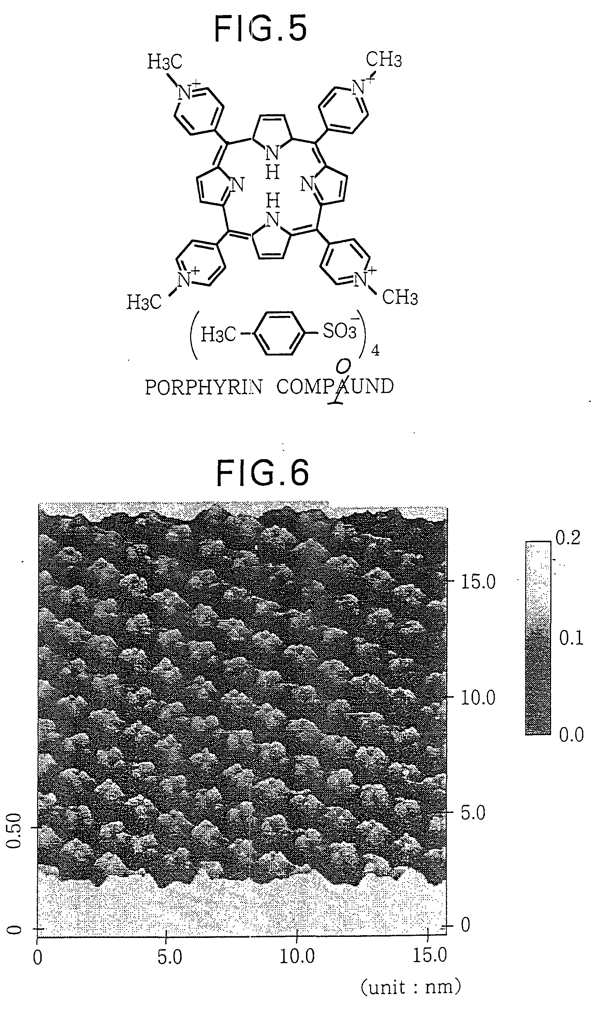

A porphyrin compound having the structure shown in Fig. 5 was used as an aromatic compound in this example, and dissolved in water to prepare a 1*µ* M solution. The Au piece onto which I was preadsorbed in the same way as in Example 1 was dipped in the aqueous solution for 30 minutes, so as to adsorb the porphyrin compound onto the Au piece.

Fig. 6 shows the STM image of the thin film obtained in this example. The porphyrin ring; is apparently noted in Fig. 6, so that the obtained organic thin film had the structure orientated with high regularity.

According to the present invention as above-mentioned, halogen or halogenic ion is preadsorbed onto a metallic surface, and then an aromatic compound is adsorbed onto the metallic surface. The halogen or halogenic ion preadsorbed onto the metallic surface reduces the adsorption force of the aromatic compound onto the metallic substrate, so that the intermolecular function between the molecules of the aromatic compound effectively serves for the autogeneous formation of the molecular structure. As a result, the obtained organic thin film has the structure orientated with high regularity. The thin films obtained in this way are useful as high-functional elements such as liquid crystal films, photoelectric transfer elements, nonlinear optical elements or sensors because of the highly-orientated structure.

## Claims

1. A method for preparing a thin film of an organic compound on a metal substrate, **characterized by** the steps:
a) adsorbing halogen or halogenic ion onto a metallic surface
b) adsorbing an aromatic compound onto the product of step a).

2. The method of claim 1, wherein step a) is performed by adsorbing halogen or halogenic ion onto a metallic substrate from a liquid or vapor phase.

3. The method of claim 1, wherein step b) is carried out by dipping the product of step a) into a solution an aromatic compound.

4. The method of claims 1 or 3, wherein the aromatic compound contains an unsaturated bond or bonds.

5. A thin film of an aromatic compound, wherein the molecules of said aromatic compound are regularly arranged, said thin film being obtainable according to any one of claims 1 to 4.

6. The thin film of claim 5 on a halogenic or halogen ion layer.

7. The thin film of claim 6 on a metallic surface.

## Patentansprüche

1. Verfahren zur Herstellung eines dünnen Films aus einer organischen Verbindung auf einem Metallsubstrat, **gekennzeichnet durch** die Schritte:
a) Adsorbieren eines Halogens oder eines Halogenidions auf einer Metalloberfläche,
b) Adsorbieren einer aromatischen Verbindung auf dem Produkt aus Schritt a).

2. Verfahren nach Anspruch 1, wobei Schritt a) durch Adsorbieren eines Halogens oder Halogenidions auf einem Metallsubstrat aus flüssiger oder dampfförmiger Phase durchgeführt wird.

3. Verfahren nach Anspruch 1, wobei Schritt b) durch Eintauchen des Produkts aus Schritt a) in eine Lösung einer aromatischen Verbindung durchgeführt wird.

4. Verfahren nach Anspruch 1 oder 3, wobei die aromatische Verbindung eine ungesättigte Bindung oder ungesättigte Bindungen enthält.

5. Dünner Film aus einer aromatischen Verbindung, wobei die Moleküle dieser aromatischen Verbindung gleichmäßig angeordnet sind, wobei dieser dünne Film nach einem der Ansprüche 1 bis 4 erhältlich ist.

6. Dünner Film nach Anspruch 5 auf einer Halogen- oder Halogenidionenschicht.

7. Dünner Film nach Anspruch 6 auf einer Metalloberfläche.

## Revendications

1. Procédé pour la préparation d'un film mince d'un composé organique sur un substrat métallique, **caractérisé par** les étapes consistant :
a) à provoquer l'adsorption d'un halogène ou ion halogéno sur une surface métallique
b) à provoquer l'adsorption d'un composé aromatique sur le produit de l'étape a).

2. Procédé suivant la revendication 1, dans lequel l'étape a) est mise en oeuvre par adsorption d'un halogène ou ion halogéno sur un substrat métallique à partir d'une phase liquide ou vapeur.

3. Procédé suivant la revendication 1, dans lequel l'étape b) est mise en oeuvre en plongeant le produit de l'étape a) dans une solution d'un composé aromatique.

4. Procédé suivant la revendication 1 ou 3, dans lequel le composé aromatique contient une ou plusieurs liaisons insaturées.

5. Film mince d'un composé aromatique, dans lequel les molécules dudit composé aromatique sont disposées régulièrement, ledit film mince pouvant être obtenu suivant l'une quelconque des revendications 1 à 4.

6. Film mince suivant la revendication 5, sur une couche d'un halogène ou ion halogéno.

7. Film mince suivant la revendication 6, sur une surface métallique.
